**Europäisches Patentamt**

(19) **European Patent Office**

**Office européen des brevets**

(11) Veröffentlichungsnummer: **0 010 201 B1**

(12) # EUROPÄISCHE PATENTSCHRIFT

(45) Veröffentlichungstag der Patentschrift:
**29.09.82**

(51) Int. Cl.³: **B 62 M 11/16**

(21) Anmeldenummer: **79103638.7**

(22) Anmeldetag: **25.09.79**

(54) **Fahrrad.**

(30) Priorität: **27.09.78 DE 2841992**
**19.01.79 DE 2901966**
**19.01.79 DE 2901967**

(43) Veröffentlichungstag der Anmeldung:
**30.04.80 Patentblatt 80/9**

(45) Bekanntmachung des Hinweises auf die Patenterteilung:
**29.09.82 Patentblatt 82/39**

(84) Benannte Vertragsstaaten:
**AT DE FR GB IT NL**

(56) Entgegenhaltungen:
**DE-C-138 824**
**FR-A-411 607**
**FR-A-477 253**
**FR-A-493 509**
**FR-A-876 657**
**FR-A-2 366 491**

(73) Patentinhaber: **Denk, Anton, Gundolfstrasse 12,**
**D-8883 Gundelfingen (DE)**
Patentinhaber: **Denk, Herbert, Ortsrand Echenbrunn 7,**
**D-8883 Gundelfingen (DE)**

(72) Erfinder: **Denk, Anton, Gundolfstrasse 12,**
**D-8883 Gundelfingen (DE)**
Erfinder: **Denk, Herbert, Ortsrand Echenbrunn 7,**
**D-8883 Gundelfingen (DE)**

(74) Vertreter: **Munk, Ludwig, Dipl.-Ing.,**
**Prinzregentenstrasse 1, D-8900 Augsburg (DE)**

# Fahrrad

Die Erfindung betrifft ein Fahrrad mit einem Rahmen, der an einem in einer Lenkgabel gehaltenen Vorderrad und an einem über Pedale mit Kurbelarmen, die an einer drehbar gelagerten Welle befestigt sind, angetriebenen Hinterrad abgestützt ist, dessen Nabe von der mit Kurbelarmen versehenen Welle zentral durchsetzt und mittels mindestens einer eine Drehzahlübersetzung bewirkenden, als Umlaufrädergetriebe ausgebildeten Getriebeeinheit drehschlüssig hiermit verbindbar ist, wobei die Welle und die Nabe beidseitig mit jeweils einer Lagerung an die Nabe seitlich überragenden Lagerkörpern gelagert sind, über welche das Hinterrad ausserhalb der Welle mit dem Fahrradrahmen verschraubbar ist, der einen etwa vertikal oberhalb der Hinterradnabe angeordneten Sattel und etwa vertikal verlaufende Hinterradstützen aufweist.

Ein Fahrrad dieser Art ist aus der FR-A-411 607 bekannt. Bei der bekannten Anordnung ist der Sattel nicht genau lotrecht oberhalb der Hinterradnabe angeordnet, was die Beinhaltung beeinträchtigen kann. Die Hinterradstützen sind leicht gekröpft, was eine Biegebeanspruchung hervorrufen kann. Abgesehen davon, ist bei der bekannten Anordnung die Nabe jedoch formschlüssig mit der als Planetengetriebe ausgebildeten Getriebeeinheit verbunden. Die Nabe und die diese durchsetzende Welle sind daher fest miteinander gekoppelt und werden gegenseitig voneinander mitgenommen. Die Folge davon ist, dass die Pedale stets in Bewegung sind, was sich erfahrungsgemäss als sehr ermüdend erweist. Besonders nachteilig wirkt sich dies jedoch bei Bergfahrten aus, weil hierbei die Pedale infolge des Hangabtriebs praktisch mit hoher Geschwindigkeit und mit hohem Moment angetrieben werden, so dass die von den Pedalen auf die Beine des Fahrers übertragenen Kräfte normalerweise hiervon nicht mehr aufgenommen werden können. Die Folge davon ist, dass die Pedale freigegeben werden, was jedoch infolge fehlender Steuerungsmöglichkeit zu einer hohen Unfallgefahr führen kann.

Bei einem aus der DE-C-138 824 bekannten Fahrrad eingangs erwähnter Art ist zwar der Sattel genau oberhalb der Hinterradnabe angeordnet, was eine günstige Beinhaltung gewährleistet. Die Hinterradstützen können dabei praktisch genau vertikal verlaufen, was eine günstige Dimensionierung ermöglicht. Dasselbe gilt für die FR-A-876 657. In beiden Fällen liegt jedoch wie im Falle der aus der FR-A-411 607 entnehmbaren Anordnung eine starre, freilauflose Kopplung zwischen der Hinterradnabe und der diese durchsetzenden Welle vor. Bei der aus der DE-C-138 824 entnehmbaren Anordnung soll die Hinterradnabe aus zwei ineinanderschraubbaren Teilen bestehen, die zur Bewerkstelligung einer Übersetzungsänderung auseinandernehmbar und austauschbar sind. Eine Anordnung dieser Art erweist sich demnach nicht nur als sehr platzaufwendig, sondern auch als sehr störanfällig.

Aus der FR-A-2 366 491 ist zwar ein kettenloses, mit einem Freilauf versehenes Fahrrad bekannt. Das Umlaufrädergetriebe ist dabei als Planetengetriebe ausgebildet, dessen äusserer Zahnkranz an einem Flansch befestigt ist, der eine die Welle umfassende Büchse trägt, die über Freilaufglieder mit der Welle verbindbar ist. Die Freilaufglieder befinden sich dabei praktisch am wellenseitigen Eingang des Umlaufrädergetriebes. Die Folge davon ist, dass das Umlaufrädergetriebe in Bewegung ist, solange das Fahrrad selbst in Bewegung ist, d.h. auch bei stehender Welle, was sich etwa beim Schieben des Fahrrads als nachteilig erweisen kann und gleichzeitig einen nicht unerheblichen, sich negativ auf die Lebensdauer und die Betriebssicherheit auswirkenden Verschleiss bewirken kann. Ausserdem führt die bekannte Anordnung zu einer sehr platzaufwendigen Konstruktion, insbesondere wenn die die Freilaufglieder durchsetzende Welle ausreichend stark dimensioniert wird.

Ausgehend von einem Stand der Technik vorstehend geschilderter Art ist es daher die Aufgabe der vorliegenden Erfindung, ein Fahrrad gattungsgemässer Art zu schaffen, das mit einem Freilauf ausgerüstet ist und das dennoch einen einfachen und platzsparenden Aufbau aufweist und einen schonenden, verschleissarmen Betrieb ermöglicht.

Diese Aufgabe wird erfindungsgemäss dadurch gelöst, dass am Ausgang der Getriebeeinheit bzw. -einheiten jeweils ein Ringkörper angeordnet ist, der drehbar auf der Welle gelagert ist und über Freilaufglieder mit der Nabe gekoppelt ist.

Durch diese Massnahmen ist sichergestellt, dass das Umlaufrädergetriebe stillgesetzt ist, sobald die Pedale nicht mehr betätigt werden, was einen schonenden, verschleissarmen Betrieb ermöglicht. Dennoch ist ein einfacher und platzsparender Aufbau gewährleistet.

Eine zweckmässige Weiterbildung der übergeordneten Massnahmen kann darin bestehen, dass die die Nabe durchsetzende Welle zur Bildung einer Rücktrittbremse direkt mit einem Bremsgewinde oder dergleichen versehen ist, in welches ein Bremskörper eingreift, mittels dessen ein mit einem Konus zusammenwirkender Bremsmantel zur Anlage an der Nabe bringbar ist. Infolge der direkten Anordnung des Bremsgewindes auf der Welle ist sichergestellt, dass eine hohe Bremskraft erreicht wird, da keine durch das Getriebe bewerkstelligte Untersetzung zu berücksichtigen ist.

Weitere zweckmässige Ausgestaltungen und vorteilhafte Fortbildungen der übergeordneten Massnahmen ergeben sich aus den restlichen Unteransprüchen in Verbindung mit der nachstehenden Beschreibung einiger Ausführungsbeispiele.

In der nachstehend beschriebenen Zeichnung zeigen:

Fig. 1 eine Gesamtansicht eines erfindungsgemässen Fahrrads,

Fig. 2 und 3 Ausführungsbeispiele mit Einganggetriebe und Rücktrittbremse anhand eines Längsschnitts durch die von der Tretkurbelwelle durchsetzte Hinterradnabe,

Fig. 4 ein Ausführungsbeispiel mit einem Mehrgang-Schaltgetriebe in Fig. 2 und 3 entsprechender Darstellung,

Fig. 5 ein Ausführungsbeispiel für ein stufenlos verstellbares Schaltgetriebe in Fig. 2 und 3 entsprechender Darstellung und

Fig. 6 bis 8 einige Varianten für Schaltvorrichtungen für eine andere Schaltgetriebe-Ausführung in Fig. 2 und 3 entsprechender Darstellung.

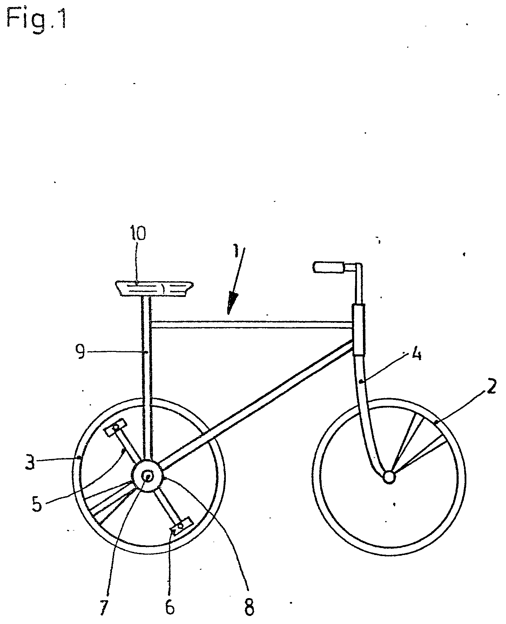

Das in Fig. 1 dargestellte Fahrrad besteht aus einem als Ganzes mit 1 bezeichneten Rahmen, der auf einem Vorderrad 2 und einem Hinterrad 3 abgestützt ist. Das Vorderrad 2 ist in einer Lenkgabel 4 aufgenommen. Das Hinterrad 3 ist über an Kurbelarmen 5 befestigte Pedale 6 direkt, d.h. ohne Kettentrieb, antreibbar. Hierzu sind die Kurbelarme 5 über eine bei 7 angedeutete Welle verbunden, welche die bei 8 angedeutete Hinterradnabe durchsetzt und drehschlüssig hiermit kuppelbar ist, wie weiter unten noch näher ausgeführt wird. Der Rahmen 1 stützt sich auf dem Hinterrad mit gabelförmig angeordneten Hinterradstützen 9 ab, die von der die Welle 7 aufnehmenden Nabe 8 etwa vertikal nach oben abgehen und an deren oberem Ende ein Sattel 10 angeordnet ist, auf welchem die die Pedale 6 bedienende Person aufsitzen kann. Da der Sattel 10 praktisch vertikal oberhalb der die Kurbelarme 5 verbindenden Welle angeordnet ist, kann die auf dem Sattel 10 aufsitzende Person die Pedale 6 in praktisch aufrechter Stellung betätigen, was einfach durch Gewichtsverlagerung erfolgen kann. Das Vorderrad 2 ist dabei vergleichsweise wenig belastet, was eine einfache Lenkung ermöglicht. Es genügt, wenn hierbei lediglich die praktisch auf Ausknicken beanspruchten Hinterradstützen 9 entsprechend stark durchgebildet sind. Die übrigen Rahmenteile können verhältnismässig leicht ausgeführt werden.

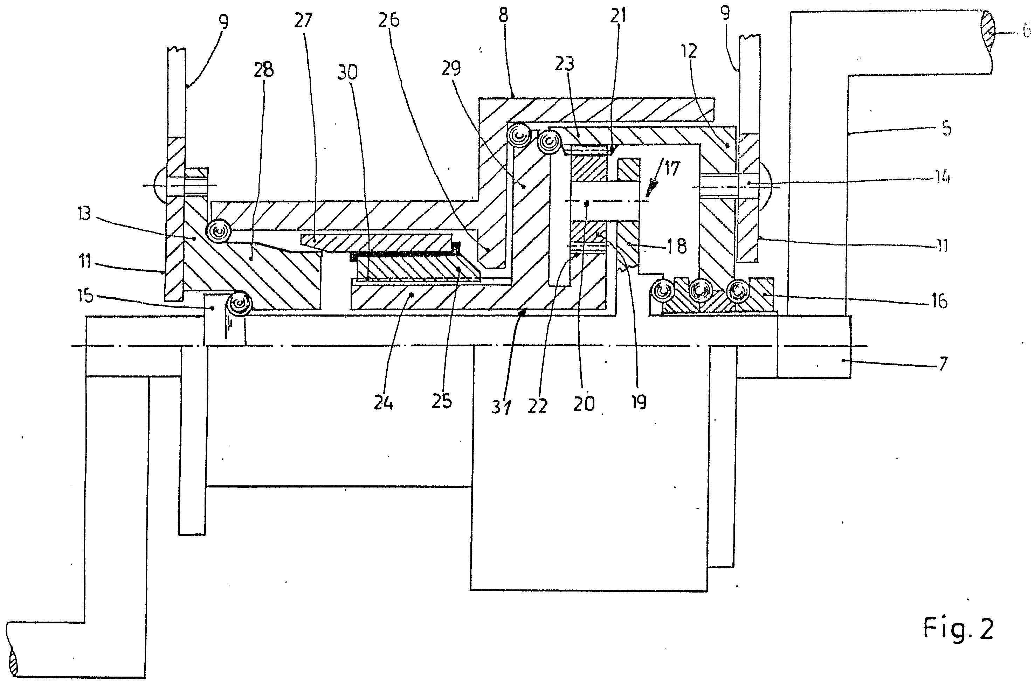

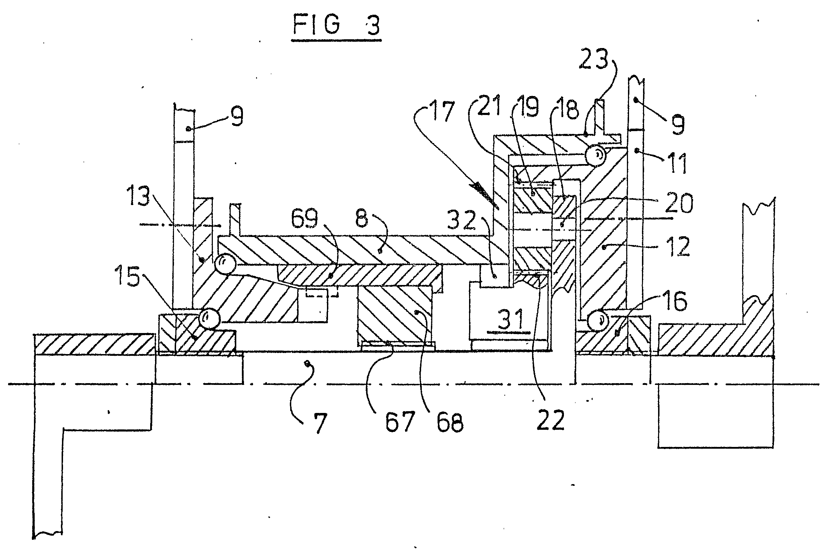

Das Hinterrad 3 ist, wie am besten aus den Fig. 2 und 3 erkennbar ist, ausserhalb der die Nabe 8 durchsetzenden Welle 7 mit den Hinterradstützen 9 bzw. mit hieran befestigten Aufnahmeringen 11 verschraubt, an denen weitere Rahmenteile, wie Querstreben usw., angreifen können. Den Aufnahmeringen 11 sind hinterradseitig die Stirnseiten der Nabe 8 überragende Lagerkörper 12 bzw. 13 zugeordnet, die mit entsprechenden Bohrungen zur Aufnahme der in Fig. 2 dargestellten Verbindungsschrauben 14 versehen sind. Die Lagerkörper 12 bzw. 13 sind mit einer fluchtenden Zentralbohrung versehen, in welcher die Welle 7 mittels Kugellager frei drehbar gelagert ist. Zu bevorzugen ist eine Lageranordnung gemäss Fig. 3, bei welcher pro Seite lediglich eine Lager vorgesehen ist. Zur Bewerkstelligung einer einfachen Einstellbarkeit dieser Wellenlagerung kann die Welle 7 einerseits mit einem festen Lagerring 15 und andererseits mit einem etwa mittels eines Gewindes einstellbaren Lagerring versehen sein, wie Fig. 2 zeigt. Bei dem in Fig. 3 dargestellten Ausführungsbeispiel sind beide Lagerringe 15 bzw. 26 einstellbar und mittels einer Kontermutter festlegbar.

Die die Kurbelarme 5 miteinander verbindende Welle 7 ist über ein hier durch eine als Ganzes mit 17 bezeichnete Getriebeeinheit, welche eine Drehzahlübersetzung bewirken soll, mit der Nabe 8 verbunden. Hierzu kann einfach ein Zahnradgetriebe vorgesehen sein. In der Ausführung gemäss Fig. 2 bzw. 3 ist zur Bildung des durch die Getriebeeinheit 17 gebildeten eingängigen Getriebes ein Planetengetriebe vorgesehen, das in vorteilhafter Weise ohne weitere Massnahmen gleiche Drehrichtungen von Welle 7 und Nabe 8 ergibt. Die Welle 7 ist hierzu zentral in der Nabe 8 angeordnet und mit einem hier zweckmässigerweise als Radialflansch ausgebildeten Planetenradhalter 18 versehen, der am Umfang mit drei Planetenrädern der bei 19 angedeuteten Art bestückt sein soll. Die Planetenräder 19 sind drehbar auf zugeordneten Bolzen 20 gelagert und stehen einerseits mit einem rahmenfesten, d.h. festgehaltenen äusseren Zahnkranz 21 und andererseits mit einem frei drehbar gelagerten inneren Zahnkranz 22 im Eingriff. Der äussere Zahnkranz 21 ist sowohl in Fig. 2 als auch in Fig. 3 einfach an einen seitlich auskragenden Bund 23 des benachbarten, mit dem Fahrradrahmen verschraubten Lagerkörpers 12 angeformt. Der innere, angetriebene Zahnkranz 22 ist an einen als Ganzes mit 31 bezeichneten Ringkörper angeformt, der seinerseits auf der Welle 7 frei drehbar gelagert ist. Hierzu kann zweckmässig, wie am besten aus Fig. 3 erkennbar ist, ein Nadellager Verwendung finden.

Bei der Ausführung gemäss Fig. 2 ist der Ringkörper 31 zur Übertragung des Drehmoments auf die Nabe 8 mit einer auf der der Getriebeeinheit 17 gegenüberliegenden Seite auskragenden Büchse 24 versehen, die ein Umfangsgewinde 30 aufweist und auf die ein Freilaufklemmkörper 25 aufgeschraubt ist, dem nabenseitig ein Mitnahmeflansch 26 zugeordnet ist. Zur Bewerkstelligung einer grossflächigen Anlage können der Freilaufkörper 25 und der Mitnahmeflansch 26 mit einander gegenüberliegenden Schrägflächen versehen sein. Durch Betätigung der Pedale 6 während des normalen Fahrbetriebs werden die Welle 7 und damit der Planetenradträger 18 in Drehung versetzt. Die Planetenräder 19 wälzen sich dabei auf dem rahmenfesten äusseren Zahnkranz 21 ab und treiben den inneren Zahnkranz 22 an, wobei in vorteilhafter Weise die Drehrichtungen von Welle 7 und Zahnkranz 22 übereinstimmen. Infolge der hierdurch bewirkten Drehbewegung der über das Gewinde 30 mit dem Freilaufklemmkörper 25 gekoppelten Büchse 24 wird der Freilaufklemmkörper zur Anlage am nabenseitigen Mitnahmeflansch 26 gebracht, wodurch eine Mitnahme der Nabe 8 in einer der Drehrichtung der Welle 7 entsprechenden Drehrichtung erfolgt. Zur Bildung einer Rücktrittbremse ist bei der Ausführung gemäss Fig. 2 der ringförmige Freilaufklemmkörper 25 von einem Bremsmantel 27 umgeben, dem ein rahmenfester Anlaufkonus 28 zugeordnet ist. Der Anlaufkonus 28 ist hierbei einfach an den seitlichen Lagerkörper 13 angeformt. Sobald der Bremsmantel 27 durch entsprechende Bewegung des mit der angetriebenen Büchse 24 in Gewindeeingriff stehenden Freilaufkörpers 25 auf den Anlaufkonus 28 aufläuft, erfolgt eine radiale Aufweitung und damit eine entsprechende Anlage an der abzubremsenden Nabe 8.

Bei dem in Fig. 3 dargestellten Ausführungsbeispiel soll der Ringkörper 31 über peripher angeordnete Freilaufglieder 32, wie Freilaufrollen bzw. -klinken mit der Nabe 8 gekoppelt sein, was eine sehr einfache und kompakte Bauweise gestattet. Diese Freilaufglieder 31 bewerkstelligen, dass von der Nabe 8 kein Drehmoment auf die Welle 7 übertragen wird und andererseits auch beim Zurücktreten bzw. beim Zurückdrehen der Welle 7 etwa zum Zwecke des Bremsens keine Mitnahme im Bereich der Freilaufrollen bzw. -klinken erfolgt. Zur Bildung einer Rücktrittbremse kann die Welle 7 bei einer Ausführungsform dieser Art in besonders vorteilhafter Weise mit einem direkt angeformten Gewinde 67 oder ähnlichen Führungsflächen versehen sein, in das bzw. die ein ringförmiger Bremskörper 68 eingreift, der in an sich bekannter Weise einen Bremsmantel 69 betätigt, der beim Zurückdrehen der Welle 7 auf einen hier ebenfalls an den Lagerkörper 13 angeformten Konus aufläuft, hierdurch aufgeweitet und zur bremsenden Anlage an der Nabe 8 gebracht wird. Zur Drehsicherung des Bremsmantels 69 kann eine hier nicht näher bezeichnete, aber dargestellte Stift-Schlitzverbindung im Bereich des Lagerkörpers 13 vorgesehen sein. Die direkte Aufnahme des Bremskörpers 68 auf der zentralen, hier angetriebenen Welle 7 ergibt ersichtlich eine hohe Bremskraft, da keine Untersetzung erfolgt, was bei einem über eine Getriebeeinheit 17 laufenden Kraftfluss der Fall wäre.

Die Nabe 8 ist, wie die Fig. 2 und 3 besonders gut erkennen lassen, jeweils auf zwei Kugellagern abgestützt. In der Ausführung gemäss Fig. 3 ist die Nabe 8 durch die beiden Kugellager direkt auf den feststehenden Lagerkörpern 12 bzw. 13 gelagert. Im Ausführungsbeispiel gemäss Fig. 2 ist die Nabe 8 einerseits auf dem Lagerkörper 13 und andererseits auf einem radialen Stützflansch 29 des angetriebenen Ringkörpers 31 gelagert, was eine ausgezeichnete Abstützung in der Nähe des hier benötigten Mitnahmeflansches 26 ergibt. Der Stützflansch 29 kann dabei seinerseits am benachbarten Bund 23 des Lagerkörpers 12 abgestützt sein, was in vorteilhafter Weise gleichzeitig eine exakte axiale Fixierung des den angetriebenen inneren Zahnkranz 22 aufnehmenden Ringkörpers 31 ergibt.

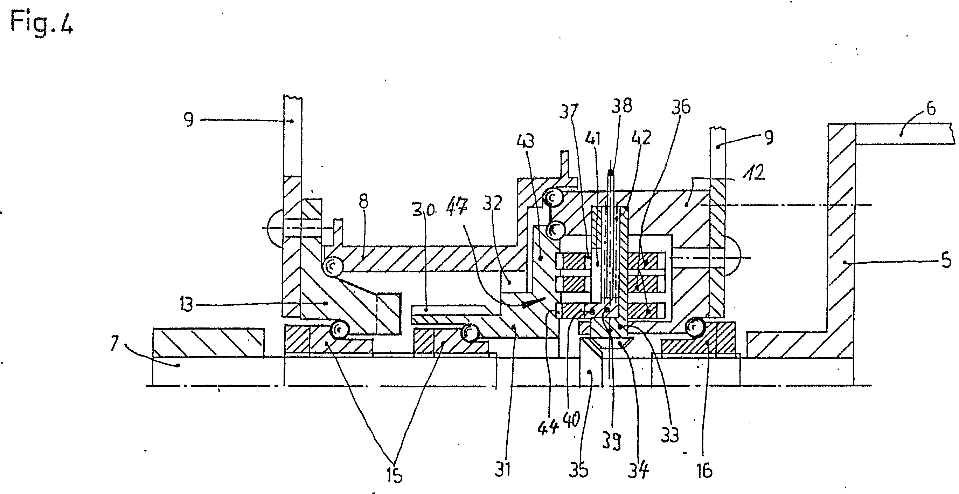

Bei dem in Fig. 4 dargestellten Ausführungsbeispiel ist die über die Pedale 6 antreibbare Welle 7 über ein dreigängiges, als Ganzes mit 47 bezeichnetes Schaltgetriebe mit der Radnabe 8 antriebsmässig verbunden. Am Ausgang des genannten Schaltgetriebes ist wiederum ein die Welle 7 umgebender, frei drehbar hierauf gelagerter Ringkörper 31 angeordnet, der über Freilaufglieder 32, etwa Freilaufrollen oder -klinken usw., mit der Nabe 8 zusammenwirkt. Das genannte Schaltgetriebe 47 weist eine etwa senkrecht zur Welle 7 angeordnete Hohlwelle 43 auf, die frei drehbar in einem gehäusefesten Bauteil, hier zweckmässig dem seitlichen Lagerkörper 12, gelagert ist. Die Hohlwelle 33 kann fliegend gelagert sein. Im dargestellten Ausführungsbeispiel ist die Hohlwelle 33 zweiseitig gelagert, wozu der Lagerkörper 12 eine geeignete, im Querschnitt etwa U-förmige Profilierung aufweist. Die Hohlwelle 33 ist an ihrem der Welle 7 zugewandten Ende mit einem Kegelrad 34 bestückt, welches mit einem auf der Welle 7 sitzenden Kegelrad 35 zusammenwirkt. Auf der Hohlwelle 33 sind in unterschiedlichem Abstand von der Achse der Welle 7 und damit auch von der Achse des die Welle 7 konzentrisch umgebenden Ringkörpers 31 zur Bildung mehrerer Gänge mehrere, hier drei Räder 36 nebeneinander angeordnet. Die Räder 36 sind frei drehbar auf der Hohlwelle gelagert und im Bereich ihrer Lagerbohrung mit jeweils einer Nut 37 versehen. Diese Räder 36 sind einzeln mit der Hohlwelle 33 drehschlüssig verbindbar. Hierzu ist die Hohlwelle 33 von einer nach aussen geführten Schaltstange 38 durchsetzt, die an ihrem in die Hohlwelle 33 hineinragenden Ende über eine Drehkupplung mit einem Verschiebeglied 39 verbunden ist. Dieses Verschiebeglied 39 ist mit einer Nase 40 versehen, die durch eine schlitzförmige Ausnehmung 41 der Hohlwelle 33 hindurch und in die Nut 37 jeweils eines Rads 36 eingreift. Die Schaltstange 38 kann hier einfach mittels eines nicht näher dargestellten Kabelzugs, der etwa zum Fahrradlenker geführt ist, entgegen der Kraft einer bei 42 angedeuteten Rückholfeder betätigt werden. Da die Hohlwelle 33 in einem rahmenfesten Bauteil gelagert ist, lässt sich der Schaltungszug ohne weiteres rahmenfest verlegen. Mit Hilfe des Verschiebeglieds 39 lässt sich ersichtlich jeweils eines der Räder 36 drehschlüssig mit der Hohlwelle 33 verbinden.

Die Räder 36 stehen im Bereich ihres Umfangs mit dem weiter oben bereits genannten Ringkörper 31 im Eingriff. Der Ringkörper 31 weist zweckmässig einen etwa hohlwellenparallelen Flansch 43 auf, der vorteilhaft am benachbarten Ringkörper 12 abgestützt sein kann und an welchem das von der Hohlwelle abgegebene Drehmoment, je nachdem welches der Räder 36 aktiviert ist, auf Spuren unterschiedlichen Durchmessers eingeleitet werden kann. Die Räder 36 können als Reibräder ausgebildet sein. In diesem Fall ist der Antriebsflansch 43 des Ringkörpers 31 zweckmässig mit geeigneten Reibflächen versehen. Im dargestellten Ausführungsbeispiel sind die Räder 36 als Zahnräder ausgebildet. In diesem Fall ist der Flansch 43 des Ringkörpers 31 mit drei den Rädern 36 zugeordneten Zahnkränzen 44 versehen. Der Abstand der Räder 36 ist in diesem Fall zweckmässig so gewählt, dass in jeder Stellung des Verschiebeglieds 39 jeweils lediglich ein Rad aktiviert ist. Der Ringkörper 31 ist, wie weiter oben bereits ausgeführt wurde, mit der Nabe 8 über einen Freilauf gekuppelt.

Sobald die Welle 7 mittels der Pedale 6 angetrieben wird, wird auch die Hohlwelle 33 über den Kegelradsatz 34, 35 in Drehung versetzt. Das mit der Hohlwelle 33 mittels des Verschiebeglieds 39 jeweils drehschlüssig verbundene Rad 36 des Rädersatzes überträgt die Drehbewegung auf den Ringkörper 31, der die Drehbewegung wiederum auf die Nabe 8 überträgt. Je nachdem, welche Schaltstellung das Verschiebeglied 39 aufweist, also je nachdem welches der Räder 36 aktiviert ist, wird das Drehmoment in grösserem oder kleinerem Abstand von der Achse des Ringkörpers 31 in diesen eingeleitet, womit sich ersichtlich unterschiedliche Übersetzungsverhältnisse ergeben. Bei dem in Fig. 4 dargestellten Ausführungsbeispiel ist lediglich ein Rädersatz am Umfang der Welle 7 vorgesehen. Es wäre jedoch auch ohne weiteres denkbar, beispielsweise zwei einander gegenüberliegende oder noch mehr gleiche Rädersätze vorzusehen, falls dies zur Kraftaufteilung erwünscht sein sollte.

Der Ringkörper 31 kann hierbei ähnlich der Ausführungsform gemäss Fig. 2 auf der dem Antriebsflansch 43 gegenüberliegenden Seite eine auskragende Büchse aufweisen, die an ihrem Umfang mit einem Bremsgewinde 30 oder ähnlichen Führungsflächen versehen ist, in das bzw. die ein aufgeschraubter, hier nicht näher dargestellter Bremskörper eingreift, der bei einer Umkehr der Drehrichtung der Welle 7 auf einen hier im Bereich des benachbarten Lagerkörpers 13 vorgesehenen Anlaufkonus aufgeschoben, hierdurch aufgeweitet und zur Anlage an der abzubremsenden Nabe 8 gebracht wird. Es wäre jedoch auch ohne weiteres denkbar, ähnlich der Ausführungsform gemäss Fig. 3 die Welle 7 direkt mit einem Bremsgewinde oder ähnlichen Führungsflächen zu versehen.

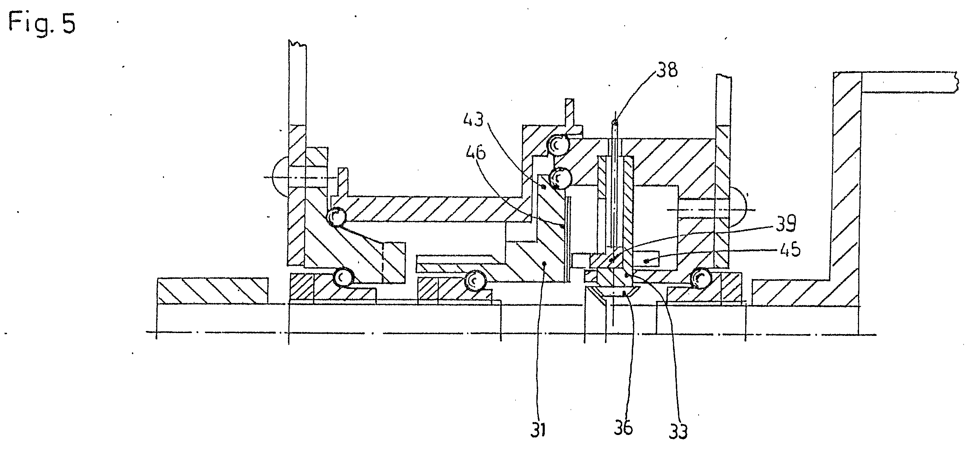

Bei dem der Fig. 5 zugrunde liegenden Ausführungsbeispiel ist anstelle mehrerer, axial auf der Hohlwelle 33 gesicherter Räder, die durch das Verschiebeglied einzeln aktivierbar sind, d.h. mit der Hohlwelle 7 drehschlüssig verbindbar sind, ansonsten jedoch im nicht aktivierten Zustand einfach frei mitdrehen können, lediglich ein Rad 45, zweckmässigerweise ein Reibrad, vorgesehen, das auf der Hohlwelle 33 axial verschiebbar gelagert und mit dem Verschiebeglied 39 fest verbunden ist, d.h. hiermit in Richtung der Achse der Hohlwelle 33 verschoben werden kann. Bei Betätigung der Schaltstange 38 wird hierbei der Abstand des Rads 45 von der Achse des Ringkörpers 31 stufenlos verändert, womit sich praktisch eine stufenlose Änderung des Übersetzungsverhältnisses erreichen lässt. Das Rad 45 soll, wie bereits gesagt, als Reibrad ausgebildet sein. Der Antriebsflansch 43 des Ringkörpers 31 kann dabei zweckmässig mit einem ringförmigen Reibbelag 46 versehen sein. Ansonsten entspricht der Aufbau dieses Ausführungsbeispiels der Anordnung gemäss Fig 4. Sofern anstelle des Reibrads 45 ein Zahnrad vorgesehen wird, ist der Antriebsflansch 43 pro Gang mit jeweils einem Zahnkranz versehen.

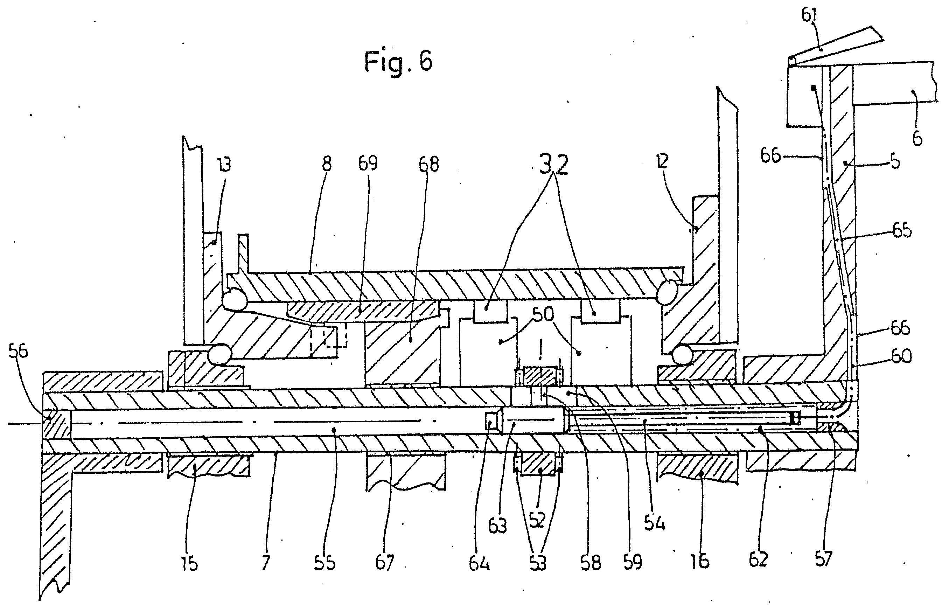

Bei der den Fig. 6 bis 8 zugrunde liegenden Ausführungsform sind zur Bildung eines mehrgängigen, hier zweigängigen Schaltgetriebes jeweils zwei als Ganzes mit 50 bezeichnete, aus Platzgründen vereinfacht als Kästchen dargestellte, von der Welle 7 durchsetzte Getriebeeinheiten nebeneinander angeordnet, die etwa der im Zusammenhang mit Fig. 3 im einzelnen geschilderten Getriebeeinheit 17 entsprechen können. Auch der übrige Aufbau entspricht in etwa der Anordnung gemäss Fig. 3. Die nachstehenden Ausführungen beschränken sich daher im wesentlichen auf die demgegenüber vorhandenen Weiterbildungen, wobei für gleiche Teile bzw. Teile gleicher Funktion der Übersichtlichkeit halber dieselben Bezugszeichen Verwendung finden.

Zum Aktivieren der hier von der Welle 7 durchsetzten Getriebeeinheiten 50 ist ein axial auf der Welle 7 verschiebbar angeordneter Kupplungsring 52 vorgesehen, der zweckmässig in formschlüssigem Eingriff mit einem entsprechenden Glied der Getriebeeinheiten 50 bringbar ist. Im dargestellten Ausführungsbeispiel ist der Kupplungsring 52 hierzu mit stirnseitig angeordneten Klauen 53 versehen. Es ist denkbar, mit Hilfe dieses Kupplungsrings etwa den im übrigen hier gegenüber der Welle 7 frei drehbar angeordneten Planetenradträger drehschlüssig mit der Welle zu koppeln. Der Kupplungsring 52 ist mittels einer in der Welle 7 aufgenommenen Schaltstange 54 axial verschiebbar und kann somit in bzw. ausser Eingriff mit jeder der beiden ihn flankierenden Gebriebeeinheiten 50 gebracht werden. Zur Aufnahme der Schaltstange 54 ist die Welle 7 als Hohlwelle ausgebildet. Im dargestellten Ausführungsbeispiel ist die Welle 7 hierzu einfach mit einer durchgehenden zentralen Bohrung 55 versehen. Die Bohrung 55 kann im Bereich der Wellenstirnseiten durch geeignete Deckel etc. verschlossen sein. In der Ausführungsform gemäss Fig. 6 sind zum Verschliessen der Bohrung 50 einfach in diese eingeschraubte Gewindepfropfen 56 bzw. 57 vorgesehen. Die Schubstange 54 ist mit einer radial vorstehenden Mitnehmernase 58 versehen, welche durch eine schlitzförmige Ausnehmung 59 der Welle 7 hindurchgreift und fest mit dem Kupplungsring 52 verbunden ist. Im Bereich ihres der Mitnehmernase 58 gegenüberliegenden Endes ist die Schaltstange 54 mit einem Kabelzug 60 verbunden, der hier lediglich durch seine Mittellinie angedeutet ist. Der Kabelzug 60 ist aus der Welle 7 herausgeführt und im Bereich seines äusseren Endes mit einem bei 61 angedeuteten, im Bereich des Pedals 6 angeordneten Fussschalter 61 verbunden. Der Fussschalter 61 kann etwa als Kniehebel ausgebildet sein, der in verschiedenen Schaltstellungen einrastbar ist.

Die Schaltstange 54 ist mittels des Fussschalthebels 61 entgegen der Kraft einer bei 62 angedeuteten Rückholfeder axial verstellbar und so in bzw. ausser Eingriff mit den Getriebeeinheiten 50 bringbar. Im dargestellten Ausführungsbeispiel ist die Rückholfeder 62 als die Schaltstange 54 umgebende Druckfeder ausgebildet, die sich einerseits an einer Verdickung 63 der Schaltstange 54 und andererseits an dem vom Kabelzug 60 durchsetzten Gewindepfropfen 57 abstützt. Die Verdickung 63 gewährleistet hierbei gleichzeitig eine ausreichende Führung der Schaltstange 54. Es wäre aber auch ohne weiteres denkbar, die Rückholfeder als Zugfeder auszubilden, die zweckmässig in dem von der Schaltstange 54 nicht durchsetzten Bereich der Bohrung 55 angeordnet sein könnte. In diesem Fall könnte der Durchmesser der Schaltstange 54 auf ihrer gesamten Länge dem Durchmesser der Bohrung 55 entsprechen, was eine einfache Herstellung, eine kompakte Ausführung sowie eine ausgezeichnete grossflächige Führung ermöglichen könnte. Zur axialen Einstellung der Mitnehmernase 58 können die Schaltstange 54 und die nasenseitige Verdickung 63 als getrennte, mit Gewindeeingriff versehene Bauteile ausgeführt sein. Im dargestellten Ausführungsbeispiel ist hierzu eine bei 64 angedeutete Einstellschraube vorgesehen.

Zur Führung des Kabelzugs 60 im Bereich des Kurbelarms 5 ist dieser mit einer von aussen unten nach innen oben verlaufenden Schrägbohrung 65 versehen, in welcher der Kabelzug 60 verlegt ist. Die Bohrung 65 kann etwa vom Bereich der der Welle 7 zugeordneten Nabe der Tretkurbel 5 bis in den Bereich des Fussschalthebels 61 verlaufen. Im dargestellten Ausführungsbeispiel mündet die Bohrung 65 im Bereich ihrer Enden in Nuten 66 ein, in welchen der Kabelzug 60 ausserhalb der Bohrung 65 geschützt geführt ist.

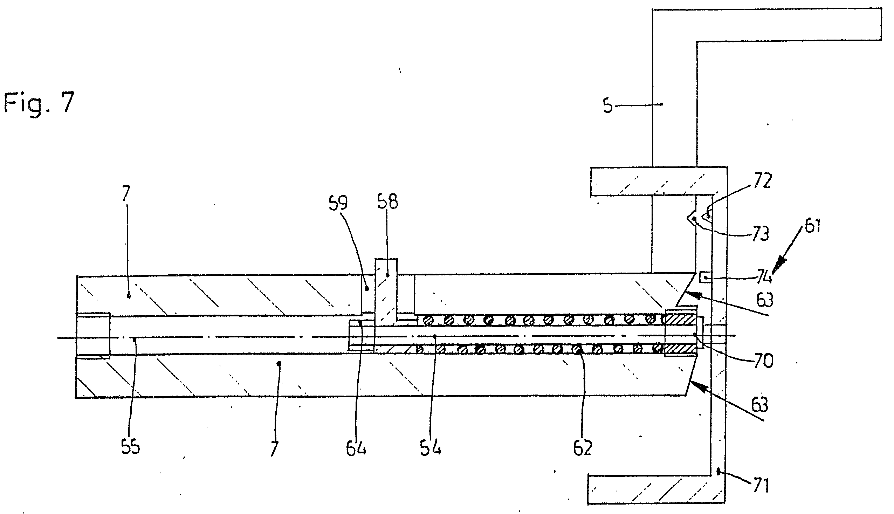

Bei dem in Fig. 7 dargestellten Ausführungsbeispiel ist die in der Welle 7 untergebrachte Schaltstange 54, die mit einer durch eine schlitzförmige Ausnehmung 59 der Welle 7 hindurchgreifenden Mitnehmernase 58 bestückt ist, über eine bei 70 angedeutete Drehkupplung mit einem frei drehbar hiergegen gelagerten, als Ganzes mit 61 bezeichneten Fussschalthebel verbunden. Dieser Fussschalthebel 61 ist im vorliegenden Ausführungsbeispiel mit zwei an ihren Enden pedalartig abgekröpften Armen 71 versehen, die sich in einer etwa zur Ebene des benachbarten Tretkurbelarms 5 parallelen Ebene erstrecken. Zur Bewirkung einer Axialverstellung der Schaltstange 54 ist eine von dem gegenüber der Schaltstange 54 drehbaren Schalthebel 61 abgetastete Raumkurve 63 mit entsprechender Erhebung bzw. Vertiefung in axialer Richtung vorgesehen. Im dargestellten Ausführungsbeispiel ist die Kurve 63 direkt an eine Stirnseite der Welle 7 angeformt, was eine einfache und kompakte Ausführung ergibt. Die Arme 71 des Fussschalthebels 61 können mit Rastzähnen der bei 72 angedeuteten Art versehen sein, denen zur Definition der erwünschten Schaltstellungen geeignete Rastmulden 73 zugeordnet sein können. Im dargestellten Ausführungsbeispiel sind die Rastmulden 73 einfach im Bereich der Tretkurbelarme 5 vorgesehen. Es wäre aber auch ohne weiteres denkbar, ein grösseres Segment zur Aufnahme der Rastmulden vorzusehen. Zur Einstellung der Mitnehmernase 58, die im übrigen einfach mittels einer geeigneten Büchse auf die Schaltstange 54 aufgeschoben sein kann, ist ebenfalls eine Stellschraube 64 vorgesehen, an welcher die Mitnehmernase 58 durch die Kraft der bei 62 angedeuteten Rückholfeder zur Anlage gebracht wird. Bei einer Verdrehung des hier die Kurve 63 abtastenden Fussschalthebels 61 wird dieser entsprechend der Steigung der Kurve 63 axial verschoben und hiermit gleichzeitig die in axialer Richtung fest hiermit gekoppelte Schaltstange 54. Zur Abtastung der Kurve 63 können im Bereich der Arme 71 geeignete Taststifte bzw. -rollen der bei 74 angedeuteten Art vorgesehen sein.

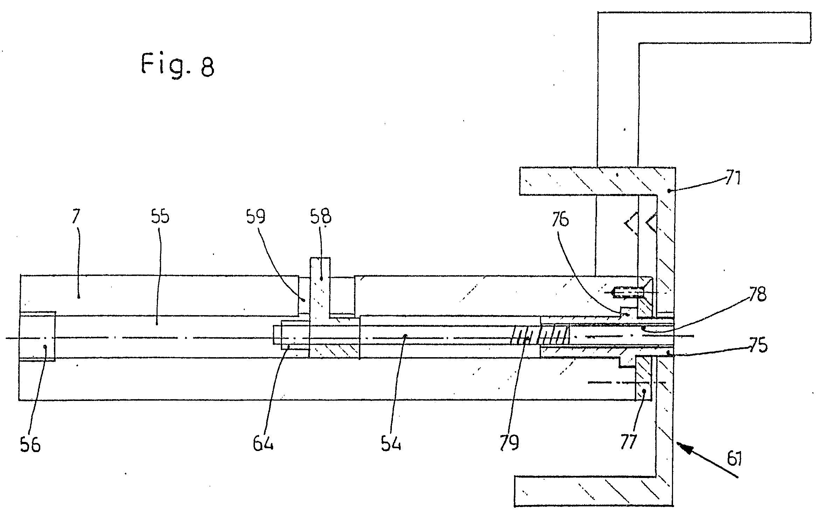

Bei dem in Fig. 8 dargestellten Ausführungsbeispiel ist der hier ebenfalls wieder als Ganzes mit 61 bezeichnete, zwei pedalartig abgekröpfte Arme 71 aufweisende Fussschalthebel auf einem Drehzapfen 75 verkeilt, der mittels eines angeformten Bunds 76 drehbar, aber in axialer Richtung feststehend an der Welle 7 gelagert ist. Hierzu ist die Welle 7 stirnseitig einfach mit einer den Bund 76 aufnehmenden Eindrehung versehen und mittels eines Deckels 77 abgedeckelt. Der Drehzapfen 75 ist mit einer Gewindebohrung 78 versehen, in welche ein an die Schaltstange 54 angeformter Gewindezapfen 79 eingreift. Die Schaltstange 54 ist infolge ihrer festen Verbindung mit der durch eine schlitzförmige Ausnehmung 59 der Welle 7 hindurchgreifenden Mitnehmernase 58 gegenüber der Welle 7 nicht verdrehbar. Bei einer Verdrehung des Fussschalthebels 61 schraubt sich somit der Gewindezapfen 79 der Schaltstange 54 mehr oder weniger weit in die zugeordnete Gewindebohrung 78 des mit dem Fussschalthebel 61 verkeilten Zapfens 75 hinein, wodurch eine axiale Verstellung der Schaltstange 54 und damit der Mithehmernase 58 bewerkstelligt ist. Zur axialen Einstellung der Mitnehmernase 58 kann wiederum eine Stellschraube 64 vorgesehen sein. Eine Rückholfeder ist bei einer Ausführungsform dieser Art praktisch nicht erforderlich. Die Bohrung 55 der Welle 7 kann daher ohne weiteres als Sackbohrung ausgeführt sein. Im dargestellten Ausführungsbeispiel ist die Bohrung 55 der Einfachheit halber als durchgehende, mittels eines Gewindepfropfens 56 verschlossene Bohrung ausgebildet. Zur Definition der erwünschten Schaltstellungen kann auch bei einer Ausführungsform hier vorliegender Art eine Rasteinrichtung mit Rastzähnen 72 und Rastmulden 73 vorgesehen sein.

Vorstehend sind zwar einige besonders bevorzugte Ausführungsbeispiele der Erfindung näher erläutert, ohne dass jedoch hiermit eine Beschränkung verbunden sein soll. Vielmehr stehen dem Fachmann eine Reihe von Möglichkeiten zur Verfügung, um den allgemeinen Gedanken der erfindungsgemässen Lösung an die Verhältnisse des Einzelfalls anzupassen.

So wäre es ohne weiteres auch möglich, zwischen Welle 7 und Nabe 8 keinen Freilauf vorzusehen, was bei Rennrädern insbesondere zum Fahren von Hallenrennen erwünscht sein kann. Derartige Rennräder benötigen in der Regel auch keine Rücktrittbremse. Die mit den erfindungsgemässen Massnahmen erzielbare Gewichtsersparnis gegenüber herkömmlichen Fahrrädern ist bei Rennrädern von ganz besonderem Vorteil.

**Patentansprüche**

1. Fahrrad mit einem Rahmen, der an einem in einer Lenkgabel gehaltenen Vorderrad (2) und an einem über Pedale (6) mit Kurbelarmen, die an einer drehbar gelagerten Welle (7) befestigt sind, angetriebenen Hinterrad (3) abgestützt ist, dessen Nabe (8) von der mit Kurbelarmen (5) versehenen Welle (7) zentral durchsetzt und mittels mindestens einer eine Drehzahlübersetzung bewirkenden, als Umlaufrädergetriebe ausgebildeten Getriebeeinheit (17 bzw. 47 bzw. 50) drehschlüssig hiermit verbindbar ist, wobei die Welle (7) und die Nabe (8) beidseitig mit jeweils einer Lagerung an die Nabe (8) seitlich überragenden Lagerkörpern (12 bzw. 13) gelagert sind, über welche das Hinterrad (3) ausserhalb der Welle (7) mit dem Fahrradrahmen (1) verschraubbar ist, der einen etwa vertikal oberhalb der Hinterradnabe (8) angeordneten Sattel (10) und etwa vertikal verlaufende Hinterradstützen (9) aufweist, dadurch gekennzeichnet, dass am Ausgang (Teile 22 bzw. 43) der Getriebeeinheit bzw. -einheiten (17 bzw. 47 bzw. 50) jeweils ein Ringkörper (31) angeordnet ist, der drehbar auf der Welle (7) gelagert ist und über Freilaufglieder (25 bzw. 32) mit der Nabe (8) gekoppelt ist.

2. Fahrrad nach Anspruch 1, dadurch gekennzeichnet, dass die Welle (7) ein Bremsgewinde (67) oder dergleichen aufweist, in welches ein Bremskörper (68) eingreift, mittels dessen ein mit einem Konus zusammenwirkender Bremsmantel (69) zur Anlage an der Nabe (8) bringbar ist.

3. Fahrrad nach wenigstens einem der vorhergehenden Ansprüche, dadurch gekennzeichnet, dass die die Welle (7) mit der Nabe (8) verbindende Getriebeeinheit (17 bzw. 50) als Planetenradgetriebe mit an der Welle (7) befestigtem Planetenradträger (18) und rahmenfestem äusseren Zahnkranz (21) sowie mit vorzugsweise an mit der Nabe (8) kuppelbaren Ringkörper (31) befestigten inneren Zahnkranz (22) ausgebildet ist.

4. Fahrrad nach wenigstens einem der vorhergehenden Ansprüche mit einem aus mehreren nebeneinander angeordneten Getriebeeinheiten (50) bestehenden Schaltgetriebe, dadurch gekennzeichnet, dass die Welle (7) zumindest teilweise als Hohlwelle ausgebildet ist und eine Schaltstange (54) aufnimmt, die einerseits zur Aktivierung der Getriebeeinheiten (50) mit einer durch eine schlitzförmige Ausnehmung (59) der Welle (7) hindurchgreifenden Mitnehmernase (58) versehen ist, und die anderseits mittels einer mit einem Fussschalthebel (61) verbundenen, im Pedalbereich angeordneten, als Kabelzug (60) oder Schalthebel (61) ausgebildeten Betätigungseinrichtung axial verschiebbar ist.

5. Fahrrad nach Anspruch 4, dadurch gekennzeichnet, dass die Schaltstange (54) mit einem Kabelzug (60) verbunden ist, der zumindest teilweise in einer die der Schaltstange (54) benachbarte Tretkurbel (5) von aussen unten nach innen oben schräg durchsetzenden und mit ihren Enden in kurbelseitig vorgesehene Führungsnuten einmündenden Bohrung (65) geführt und mittels des im Bereich des zugeordneten Pedals (6) angebrachten Fussschalters (61) entgegen der Kraft einer in der Bohrung (55) angeordneten Feder (62) betätigbar ist, oder dass die Schaltstange (54) über eine Drehkupplung (70) mit dem koaxial hierzu frei drehbar gelagerten Schalthebel (61) verbunden ist, der zumindest einen in einer tretkurbelparallelen Ebene angeordneten Arm (71) aufweist, der entgegen der Kraft einer in der Bohrung (55) angeordneten Feder (62) in mehreren Winkelstellungen mittels einer vorzugsweise einen Raststift (72) und zugeordnete Rastlöcher (73) aufweisenden Rasteinrichtung feststellbar ist.

6. Fahrrad nach wenigstens einem der vorhergehenden Ansprüche 1 oder 2 mit einem Mehrgang-Schaltgetriebe, dadurch gekennzeichnet, dass in dem die Nabe (8) seitlich überragenden Lagerkörper (12) mindestens eine etwa senkrecht zu der die Nabe (8) durchsetzenden Welle (7) ausgerichtete, hiervon mittels eines Kegelradsatzes (34, 35) angetriebene und mit dem mit der Nabe (8) kuppelbaren, die Welle (7) umgebenden, frei drehbaren Ringkörper (31) antriebsmässig verbundene Hohlwelle (33) drehbar gelagert ist, die von einer nach aussen geführten Schaltstange (38) durchsetzt ist, die mit einem durch eine schlitzförmige Ausnehmung (41) der Hohlwelle (33) hindurchgreifenden Verschiebeglied (39) verbunden ist, mittels dessen das von der Hohlwelle (33) auf den mit einem hohlwellenparallelen Antriebsflansch (43) versehenen Ringkörper (31) übertragene Drehmoment in unterschiedlichem Abstand von der Achse des Ringkörpers auf diesen übertragbar ist.

7. Fahrrad nach Anspruch 6, dadurch gekennzeichnet, dass das Verschiebeglied (39) mit einem auf der Hohlwelle (33) axial verschiebbaren Rad (45), vorzugsweise Reibrad, verbunden ist, das mit dem Antriebsflansch (43) des Ringkörpers (31) zusammenwirkt.

8. Fahrrad nach Anspruch 7, dadurch gekennzeichnet, dass auf der Hohlwelle (33) mehrere in unterschiedlichem Abstand von der Achse des Ringkörpers (31) angeordnete, mit einer zugeordneten Spur (44) des Antriebsflansches (43) des Ringkörpers (31) zusammenwirkende Räder (36) angeordnet sind, die mittels des Verschiebeglieds (39) jeweils einzeln drehschlüssig mit der Hohlwelle (33) verbindbar sind.

**Claims**

1. A bicycle having a frame, which is supported on a front wheel (2) joined to a steering fork, and on a back wheel (3) powered by way of pedals (6) with cranks, which are fixed to a bearinged shaft (7), and the hub (8) of the back wheel (3) has the shaft (7), which has the cranks (5) on it, centrally running through it and is able to be joined by at least one gearing unit (17, 47 or 50) responsible for changing the speed of turning and in the form of epicyclic gearing may be turningly joined with the same, and the shaft (7) and the hub (8) are supported on their two sides with, in each case, one bearing on bearing bodies (12 and 13) running out to the side of the hub (8), and by way of the bearing bodies the back wheel (3) may be screw-joined outside the shaft (7) with the bicycle frame (1), which has a saddle (10) placed generally vertically over the back wheel hub (8), and has back wheel supports (9) which are generally upright, characterized in that at the output (parts 22 or 43) of the gearing unit or units (27, 47 or 50) in each case a ring-like body (31) is placed which is turningly bearinged on the shaft (7) and is joined up by way of free wheel parts (25 and 32) with the hub (8).

2. A bicycle as claimed in claim 1, characterized in that the shaft (7) has a brake screw thread (67) or the like taking up a brake body (68) by way of which a brake casing (69), functioning with a cone may be moved up against the hub (8).

3. A bicycle as claimed in claim 1 or claim 2, characterized in that the gearing unit (17 or 50) joining the shaft (7) with the hub is in the form of epicyclic gearing with a planet support (18) fixed to the shaft (7) and an outer annulus (21) fixed to the frame, and more specially an inner annulus (22) fixed to a ring body (31) which may be joined up with the hub (8).

4. A bicycle as claimed in anyone of claims 1 to 3 with a change speed gear box made up of a number of gearing units (50) placed side by side, characterized in that the shaft (7) ist at least partly in the form of a hollow shaft and takes up a driving rod (54) which on the one hand, for the purpose of putting the gearing unit (50) into operation, has a driving nosepiece (58) running through a slot (59) in a shaft (7) and on the other hand it may be changed in position axially by way of an operation part joined up with a driving foot lever (61) and which is placed near the pedal and takes the form of a bowden cable (60) or a lever (61).

5. A bicycle as claimed in claim 4, characterized in that the driving rod (54) is joined up with a bowden cable (60), which is at least partly taken up in a hole (65) running through the crank (5), next to the driving rod (54), from a lower outer position to an upper inner position at a slope with its ends opening into guide grooves on the crank side, and which may be worked with the help of a foot switch (61), placed near the nearer pedal (6) against the force of a spring (62) placed in the hole (55) or in that the driving rod (54) is joined up by way of a turning coupling (70) with a driving lever (61) bearinged coaxially thereto for free turning motion and the driving lever (61) has at least one arm (71) placed in a plane parallel to the crank and able to be fixed against the force of a spring (62) placed in the hole (55), at a number of different angles by way of a locking unit more specially having a locking pin (72) and locking holes (73) for use therewith.

6. A bicycle as claimed in claim 1 or claim 2 with a many-speed gear system, characterized in that in the bearing body (12) running out to the side past the hub (8) there is bearinged at least one hollow shaft (33) which is generally at a right angle to the shaft (7) running through the hub (8), is turned by the shaft (7) by way of bevel wheels (34, 35) and is drivingly joined with the freely turning ring body (31) placed round the shaft (7) and able to be joined up with the hub (8), there being an outwardly guided driving rod (38) running through the said hollow shaft (33), said driving rod (38) being joined up with a shifting part (39) running through a slot (41) in the hollow shaft (33), and by way of the shifting part (39) the torque transmitted by the hollow shaft (33) onto the ring-like body (31), which has a driving plate (43) parallel to the hollow shaft, may be transmitted to the ring-like body at a different distance from the axis of the ring-like body.

7. A bicycle as claimed in claim 6, characterized in that the shifting part (39) is joined up with a wheel (45), more specially a friction wheel, which may be moved axially on the hollow shaft, such wheel running on the driving plate (43) of the ring-like body (31).

8. A bicycle as claimed in claim 7, characterized by a number of wheels (36) placed on the hollow shaft (33) at different distances from the axis of the ring-like body (31) for running on a given track (44) of the driving plate (43) of the ring-like body (31), such wheels being able to be joined up turningly with the hollow shaft (33) separately by way of the shifting rod (39).

**Revendications**

1. Bicyclette comportant un cadre, solidaire d'une fourche de direction fixée à la roue avant (2) et d'une roue arrière (3) rotative autour d'un arbre (7) supporté par des paliers auxquels sont fixés les pédaliers (5) portant les pédales (6), l'arbre (7) étant logé au centre du moyeu (8) de la roue auquel il est connecté par l'intermédiaire d'un dispositif de démultiplication constituant le mécanisme d'entrainement (17, respectivement 47, respectivement 50), l'arbre (7) portant les pédaliers (5) et le moyeu (8) étant porté respectivement par des paliers (12), respectivement (13) latéraux et par l'intermédiaire desquels la roue (8) est fixée au cadre (1), qui comporte une selle (10) disposée à l'extrémité supérieure d'une tige support (9) surmontant sensiblement verticalement le moyeu (8) de la roue arrière, caractérisée en ce qu'elle comporte à la sortie (22), respectivement (43) du mécanisme d'entrainement (17, respectivement 47, respectivement 50), un corps annulaire (31) monté en rotation sur l'arbre (7) et qui est accouplé au moyeu (8) par l'intermédiaire d'éléments de roue libre (25), respectivement (32).

2. Bicyclette selon la revendication 1, caractérisée en ce que l'arbre (7) comporte un filetage de freinage (67) ou similaire, en prise avec un organe de freinage (68) par l'intermédiaire du quel un manteau de freinage (69) qui coopère avec un cône, peut être amené en contact avec le moyeu (8) de la roue.

3. Bicyclette selon l'une quelconque des revendications précédentes, caractérisée en ce que le mécanisme d'entrainement (17), respectivement (50), qui assure la connexion entre l'arbre (7) et le moyeu (8), est constitué par un entrainement à planétaires dont le support (18) est fixé à l'arbre (7), dont la couronne dentée extérieure (21) est solidaire du cadre et dont la couronne dentée intérieure (22) est de préférence fixée au corps annulaire (31) solidaire du moyeu (8).

4. Bicyclette selon l'une quelconque des revendications précédentes, comportant un dispositif de changement de vitesse comprenant plusieurs unités d'entrainements (50) adjacentes, caractérisée en ce que l'arbre (7) est au moins partiellement tubulaire et contient une tringle de changement de vitesse (54), destinée d'une part à commander les mécanismes d'entrainement (50) et pourvue d'un doigt d'entrainement (58) qui traverse un évidement (59) en forme de fente ménagée dans l'arbre (7), et qui est d'autre part reliée à un levier de commande de vitesses au pied (61) disposé au voisinage des pédales, cette tringle de changement de vitesses constituant un dispositif de commande mobile axialement et étant réalisée sous la forme d'un câble de traction (60) ou d'un levier de commande (61).

5. Bicyclette selon la revendication 4, caractérisée en ce que la tringle de changement de vitesses (54) est reliée à un câble (60), guidé au moins partiellement dans ladite tringle (54) et dans le pédalier (5) pourvu d'un alésage (65) ménagé en biais et traversant la pièce depuis le bas à l'extérieur vers le haut à l'intérieur, pour relier des rainures de guidage ménagées aux extrémités du pédalier, ce câble étant commandé par le levier de commande à pied (61), monté à proximité de la pédale (6), en s'opposant à la force d'un ressort (62) logé dans l'alésage (55), ou en ce que la tringle de commande des vitesses (54) est reliée au levier de commande (61), disposé coaxialement à cette tringle, par l'intermédiaire d'une rotule (70), ce levier (61) comportant au moins un bras (71) disposé dans un plan parallèle au pédalier, ce bras pouvant être placé dans différentes positions angulaires définies par un cliquet (72) et des encoches d'encliquetage (73), et par le ressort (62) logé dans l'alésage (55).

6. Bicyclette selon l'une quelconque des revendications 1 ou 2, comportant un dispositif de changement de vitesses à plusieurs vitesses, caractérisée en ce que le palier (12), qui dépasse latéralement le moyeu (8), porte un axe creux (33) au moins approximativement perpendiculaire à l'arbre (7) traversant le moyeu (8), cet axe étant connecté au corps annulaire (31) libre en rotation et entourant l'arbre (7), entrainé au moyen d'un jeu de pignons dentés (34, 35) et susceptible d'être couplé au moyeu (8), cet axe creux (33) étant traversé par la tringle de changement de vitesses (38) qui est reliée à un élément coulissant (39) engagé dans un évidement en forme de fente (41) ménagée dans cet axe, cet élément étant destiné à transmettre le moment de rotation de l'arbre creux (33) au corps annulaire (31), pourvu d'un flasque d'entrainement (43) parallèle à l'arbre creux, en des points se trouvant à distances variables de l'axe dudit corps annulaire.

7. Bicyclette selon la revendication 6, caractérisée en ce que l'élément coulissant (39) est relié à une roue de friction (45) mobile axialement, qui coopère avec le flasque d'entrainement (43) du corps annulaire (31).

8. Bicyclette selon la revendication (7), caractérisée en ce que l'axe creux (33) comporte plusieurs roues (36) disposées à distances variables de l'axe du corps annulaire (31) et coopérant avec plusieurs pistes (44) du flasque d'entrainement (43) du corps annulaire (31), chacune de ces roues pouvant être amenée individuellement en prise avec l'axe creux (33) au moyen de l'élément coulissant (39).

Fig.1

Fig. 2

FIG 3

Fig.4

0 010 201

Fig. 5

0 010 201

Fig.6

Fig. 7

Fig. 8